# EUROPÄISCHE PATENTSCHRIFT

(11) **EP 2 041 228 B1**
(45) Veröffentlichungstag und Bekanntmachung des Hinweises auf die Patenterteilung: **26.12.2018**
(21) Anmeldenummer: 07821731.2
(22) Anmeldetag: 23.10.2007
(51) Int. Cl.: C09D 1/00, C23C 28/04, C23C 18/12, C23C 26/00

(54) **ALKALIRESISTENTE BESCHICHTUNG AUF LEICHTMETALLOBERFLÄCHEN**
ALKALI-RESISTANT COATING ON NON-FERROUS METAL SURFACES
REVÊTEMENT RÉSISTANT AUX ALCALIS SUR DES SURFACES EN MÉTAL LÉGER

(30) Priorität: 24.10.2006 DE 102006050102
(43) Veröffentlichungstag der Anmeldung: 01.04.2009
(73) Patentinhaber: EPG (Engineered nanoProducts Germany) AG, 64347 Griesheim (DE)
(72) Erfinder: AKARSU, Murat, Tucson, AZ 85750 (US); ARPAC, Ertugrul, 07058 Antalya (TR); SCHMIDT, Helmut, 66130 Saarbrücken-Güdingen (DE)
(74) Vertreter: Held, Stephan
(86) Internationale Anmeldenummer: PCT/EP2007/061368
(87) Internationale Veröffentlichungsnummer: WO 2008/049846

(56) Entgegenhaltungen:
- WO-A-2005/066388
- DE-A1- 10 063 739
- US-A- 5 766 680

## Beschreibung

Die vorliegende Erfindung betrifft einen Gegenstand umfassend eine Oberfläche von Leichtmetall, die mit einer alkalibeständigen Schutzschicht versehen ist, ein Verfahren zu deren Herstellung und deren Verwendung.

Metallisches Aluminium und dessen Legierungen sind ein viel benutzter Werkstoff in der Industrie, in der Praxis und im Consumer-Bereich Dies wird ausschließlich dadurch ermöglicht, dass trotz des unedlen Charakters des Metalls durch seine Fähigkeit zur Oberflächenpassivierung eine relativ hohe Beständigkeit unter Umgebungsbedingungen auftritt Dabei bildet sich eine Oxidschicht, die so dicht ist, dass sie einem korrosiven Angriff durch Feuchtigkeit standhält, Treten jedoch Bedingungen auf, die die Oxidschicht angreifen, so wird die Passivierung aufgehoben und die Korrosion schreitet schnell voran. Dies gilt für alle saure und basische Angriffe, d.h. bei einem pH oberhalb oder unterhalb pH 7. Grund ist der amphotere Charakter von Aluminiumoxid, der die Löslichkeit sowohl in Säuren als auch in Basen bewirkt.

Jeder chemische Angriff auf einen Festkörper ist bezüglich der Reaktionsgeschwindigkeit von der Größe der Oberfläche abhängig Existiert eine große spezifische Oberfläche, so ist die Auflösungsgeschwindigkeit schnell.

Zum Schutz von Aluminiumoberflächen, insbesondere in Verbindung mit dekorativen Effekten, ist die anodische Oxidation seit langem bekannt Eines der gängigen, unter dem Markennamen "Eloxal" bekannten Verfahren ist in Industrie und Praxis weit verbreitet Dabei wird mit Hilfe eines elektrischen Potentials eine Oxidschicht relativ rasch erzeugt, in die nach Bedarf Pigmente eingelagert und Farbeffekte erzeugt werden können. Die Struktur dieser Oxidschicht ist aber nicht kompakt, sondern eher porös, so dass sie zum Beispiel einem alkalischen Angriff eine große Oberfläche bietet Deswegen sind diese anodischen Schichten gegenüber Basen sehr empfindlich.. Daher werden sie z.B bei pH-Werten, wie sie in einer Spülmaschine herrschen, mehr oder weniger rasch angegriffen oder aufgelöst oder sie bleichen aus.

Da insbesondere die über die anodische Oxidation hergestellten Oberflächeneffekte für dekorative Effekte eine hohe Bedeutung haben, ist die Herstellung von spülmaschinenfesten, dekorativen Schichten z.B. auf Aluminiumoberflächen, wie sie z.B. für Haushaltsgeräte erforderlich sind, von hoher Bedeutung.

In der Literatur sind Sol-Gel-Verfahren beschrieben, bei denen hydrolytisch stabile Oxide in flüssiger Form auf eine Oberfläche aufgetragen und anschließend thermisch stabilisiert werden, z.B. durch Verdichtung oder Härtung.

Der Versuch, solche Verfahren zur Stabilisierung von anodischen Oxidschichten anzuwenden, hat sich jedoch als nicht praktikabel erwiesen, da es nicht gelingt, die den anodischen Schichten innewohnende Porosität vollständig zu schließen. Daher ist es nicht möglich, die Penetration eines alkalischen Milieus in die Schicht und an die Grenzfläche zum Aluminium zu verhindern. Es hat sich darüber hinaus erwiesen, dass sich bei Erhitzen solcher Systeme zur Stabilisierung auf Temperaturen über 200°C Schrumpfungseffekte in der porösen Schicht ergeben, die Rissbildung zur Folge haben. Dadurch wird die chemische Beständigkeit noch weiter reduziert. Die für diese Systeme eingesetzten Oxide waren Titanoxid oder Zirconiumoxid, beides Oxide die für ihre hohe alkalische Beständigkeit bekannt sind.

DE 10063739 A1 beschreibt Substrate, z.B. aus Glas, Keramik, Kunststoff oder Metall, mit einer selbstreinigenden Oberfläche, umfassend eine auf dem Substrat angeordnete strukturierte Beschichtung aus strukturbildenden Partikeln wie SiO₂ oder TiO₂ mit einem mittleren Durchmesser von weniger als 100 nm und einem schichtbildenden Material, das aus Strukturelementen Me-O-Me' gebildet werden kann, wobei Me und Me' gleich oder verschieden sein können und für B, Si, AI, P, Ti, Sn oder Zr stehen, wobei die strukturierte Beschichtung hydrophobisiert wird, z.B. durch Silanisierung mit einem Fluoralkyltrialkoxysilan.

Die Aufgabe der vorliegenden Erfindung bestand daher in der Entwicklung eines Beschichtungssystems und einer Technologie, womit einerseits anodisch oxidierte Oberflächen stabilisiert werden können, die aber andererseits auch für den Auftrag auf Aluminiumoberflächen ohne vorherige anodische Oxidation geeignet sind. Darüber hinaus sollte die Schicht in flüssiger Form aufgetragen und durch ein geeignetes Verfahren stabilisiert werden können. Es sollen rissfreie und alkalibeständige Schutzschichten erhalten werden. Ein weiteres Ziel ist die Herstellung einer transparenten Schutzschicht.

Diese Aufgabe konnte durch eine alkalibeständigen Schutzschicht gelöst werden, die auf die Oberfläche des Leichtmetalls aufgetragen wird und a) eine Oxidschicht von Silicium und Bor als Grundschicht und b) eine Oxidschicht von Silicium als glasartige Deckschicht umfasst Auf diese Weise können auf Leichtmetalloberflächen, selbst auf porösen Oberflächenschichten der Leichtmetalle, überraschenderweise rissfreie und alkaliresistente Schutzschichten erzielt werden, da die Durchlässigkeit gegenüber alkalischen Medien stark eingeschränkt ist, so dass die Schutzschicht einen ausgezeichneten Schutz gegen Angriff durch alkalische Medien bietet Da die Doppelschicht durch nasschemische Verfahren aufgebracht werden kann, ist die Herstellung der Schutzschicht darüber hinaus einfach und preiswert Es können transparente Schutzschichten erhalten werden.

Die vorliegende Erfindung betrifft somit einen Gegenstand umfassend eine Oberfläche von Leichtmetall, die mit einer alkalibeständigen Schutzschicht versehen ist, dadurch gekennzeichnet, dass die Schutzschicht a) eine Oxidschicht von Silicium und Bor als Grundschicht und b) eine Oxidschicht von Silicium als glasartige Deckschicht umfasst. Im folgenden wird die Erfindung im einzelnen erläutert.

Der Gegenstand oder die Oberfläche des Gegenstands können vollständig aus Leichtmetall sein oder ein Teil oder Bauteil des Gegenstands besitzen eine Oberfläche aus Leichtmetall, während die restlichen Teile oder Komponenten aus beliebigen anderen Werkstoffen sein können Selbstverständlich kann ein Teil mit einer Metalloberfläche zuerst mit der erfindungsgemäßen Schutzschicht versehen werden und erst anschließend mit restlichen Komponenten zu dem Gegenstand zusammengebaut werden

Der Gegenstand kann verschiedene Geometrien aufweisen. Ein Vorteil der Erfindung besteht darin, dass auch Gegenstände mit komplexeren Geometrien ohne weiteres mit der Schutzschicht versehen werden können. Es kann auch nur ein Teil der Oberfläche von Leichtmetall mit der Schutzschicht versehen werden. So besteht zum Beispiel die Möglichkeit, nur das Innere von Töpfen oder Röhren zu beschichten

Der mit der Schutzschicht zu versehene Gegenstand kann jeder beliebige Gegenstand sein, der eine Oberfläche von Leichtmetall aufweist Es kann sich z.B. auch um die reinen Werkstoffe handeln, die z.B. als Platte oder Blech vorliegen, und als Rohmaterial für die Herstellung bestimmter Gegenstände dienen. Es kann sich z.B. um Gegenstände aus den Gebieten Industrie, Transport, Automobile, Milchindustrie, Pharmazie, Sport, täglicher Bedarf, Versorgung, Labor oder Medizin handeln Konkrete Beispiele sind Rohre wie Leitungsrohre, Behälter, Fahrzeuge, medizinische Instrumente, Geräte oder Gehäuse oder Teile davon. Besonders bevorzugt handelt es sich bei den Gegenständen um Haushaltsgegenstände oder Haushaltsgeräte, wie z.B. Geschirr, Besteck, Tabletts, Pfannen, Töpfe, Backformen, Kochutensilien, Kühlschränke, Backöfen, Eierkocher, Mikrowellengeräte, Wasserkocher, Grillroste, Dampfgare, Öfen, Arbeitsflächen, Armaturen im Küche und Bad, Gehäuse von (elektrischen) Haushaltsgeräten, Spülen, Lampen und Leuchten, insbesondere Besteck und Kochgeschirr, wie Pfannen oder Töpfe, oder Teile davon. Besonders geeignet sind Gegenstände, die für die Reinigung in Spülmaschinen bestimmt sind.

Weitere Beispiele für mit der Schutzschicht zu versehene Gegenstände sind Behälter für chemische Anlagen oder Teile davon, Magnesiumbauteile, Bauteile von Automobilen aus Al.

Die Schutzschicht wird auf eine Oberfläche von Leichtmetall aufgebracht Ein Leichtmetall ist ein Metall mit einer Dichte von nicht mehr als 5 g/cm³ Unter Leichtmetall werden hier auch die Legierungen dieser Leichtmetalle verstanden. Bevorzugte Beispiele sind Aluminium, Magnesium und Titan und deren Legierungen, wobei Aluminium und dessen Legierungen besonders bevorzugt sind.

Wegen des bereits oben erläuterten unedlen Charakters der Leichtmetalle weisen sie auf der Oberfläche häufig eine Oxidschicht auf oder sie sind oberflächenbehandelt, so dass sich auf der Oberfläche der Leichtmetalle häufig mindestens eine Schicht befindet, z.B. eine Oxidschicht oder eine andere Funktionsschicht, wie eine Passivierungsschicht oder Dekorschicht, wie Oxid-, Phosphat-, Chromat-, zink- oder nickel-haltige Schichten. Diese Schichten sind häufig mehr oder weniger porös, so dass eine weitere Beschichtung zu Schwierigkeiten führen kann. Gegebenenfalls können auch andere Beschichtungen vorhanden sein, das ist aber nicht bevorzugt. Die erfindungsgemäße Schutzschicht ist besonders geeignet, wenn auf dem Leichtmetall eine solche poröse Schicht vorhanden ist, da auch in diesem Fall eine rissfreie Schutzschicht aufgebracht werden muss.

Besonders geeignet ist die Erfindung für Leichtmetalle, die eine Oxidschicht aufweisen, insbesondere eine poröse Oxidschicht Es können aber auch dichte oxidische Passivierungsschichten vorhanden sein, die in der Regel dünn sind. Die Oxidschicht kann sich von selbst bilden, d.h als "natürliche" Passivierung durch Oxidation mit dem Sauerstoff der Umgebung. Besonders bevorzugt weist das Leichtmetall, insbesondere Al oder eine Legierung davon, eine durch anodische Oxidation gebildete Oxidschicht (anodische Oxidschicht), die z.B. nach dem Eloxal®-Verfahren gebildet wurde, auf Solche anodischen Oxidschichten werden auch zur Erzielung von Oberflächeneffekten für dekorative Effekte eingesetzt und können dann z.B. eingelagerte Pigmente enthalten.

Die metallische Oberfläche kann vor dem Auftrag der Beschichtungszusammensetzung gründlich gereinigt und insbesondere von Fett und Staub befreit werden. Vor der Beschichtung kann auch eine Oberflächenbehandlung, z.B. durch CoronaEntladung, durchgeführt werden.

Der Gegenstand wird auf der Oberfläche von Leichtmetall oder einem Teil davon mit einem alkaliresistenten Schutzschichtsystem aus zwei Schichten, einer Grundschicht und einer darüber liegenden Deckschicht versehen. Beide Schichten werden insbesondere mit Hilfe eines nasschemischen Verfahrens aufgebracht, d.h. die Beschichtungszusammensetzungen sind flüssig bzw. gießfähig, z.B. in Form einer Lösung, Dispersion, Emulsion oder vorzugsweise eines Sols. Die Beschichtungszusammensetzungen umfassen ein Hydrolysat oder Kondensat von hydrolysierbaren Verbindungen.. Die Hydrolyse oder Kondensation der hydrolysierbaren Verbindungen erfolgt vorzugsweise nach dem Sol-Gel-Verfahren.

Bei der Hydrolyse und/oder Kondensation, insbesondere nach dem Sol-Gel-Verfahren werden gewöhnlich hydrolysierbare Verbindungen mit Wasser, gegebenenfalls unter saurer oder basischer Katalyse, hydrolysiert und gegebenenfalls zumindest teilweise kondensiert. Dabei wird hier auch die Reaktion von Salzen mit Wasser als Hydrolyse angesehen. Die Hydrolyse- und/oder Kondensationsreaktionen führen zur Bildung von Verbindungen oder Kondensaten mit Hydroxy-, Oxogruppen und/oder Oxobrücken, die als Vorstufen für die zu bildende Oxidschicht dienen. Sofern hydrolysierbare Verbindungen mehrerer Elemente eingesetzt werden, können auch Kondensate gebildet werden, die mehrere Elementen enthalten, z.B. Si, B und gegebenenfalls Ti, oder es werden verschiedene Kondensate gebildet, die jeweils im wesentlichen aus einem Element gebildet sind. Es können stöchiometrische Wassermengen bezogen auf die Anzahl hydrolysierbarer Gruppen, aber auch geringere oder größere Mengen verwendet werden, bevorzugt sind etwa stöchiometrische Mengen Wasser zur Hydrolyse Das sich bildende Hydrolysat und Kondensat ist insbesondere ein Sol und kann durch geeignete Parameter, z.B. Kondensationsgrad, Lösungsmittel oder pH-Wert, auf die für die Beschichtungszusammensetzung gewünschte Viskosität eingestellt werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben

Die Hydrolyse wird durch Zugabe von Wasser, gegebenenfalls in Anwesenheit eines Katalysators, bevorzugt einer Säure, eingeleitet Die Reaktion kann durch Erwärmen unterstützt werden Die Dauer der Reaktion kann in weiten Bereichen variieren und hängt z.B. von der Menge an Wasser, der Temperatur, der Natur des Ausgangsverbindungen und dem Katalysator ab. Die hydrolysierbaren Verbindungen können gemeinsam oder getrennt hydrolysiert werden und anschließend vereinigt werden Es kann auch erst eine hydrolysierbare Verbindung mit Wasser hydrolysiert werden und die andere hydrolysierbare Verbindung zu einem späteren Zeitpunkt zu dieser Mischung gegeben werden Die Zugabe der gewünschten Wassermenge kann zeitlich in mehreren Portionen erfolgen. Im übrigen kann die Hydrolyse und Kondensation gemäß den dem Fachmann geläufigen Modalitäten durchgeführt werden

Die Beschichtungszusammensetzung für die Grundschicht umfasst ein Hydrolysat oder Kondensat von einer oder mehreren hydrolysierbaren Siliciumverbindungen und einer oder mehreren hydrolysierbaren Borverbindungen. Dabei ist zweckmäßigerweise darauf zu achten, dass bei der anschließenden Verdichtung der Schicht ein ausreichender Anteil an viskosem Fließen als Sintermechanismus erhalten wird, um Spannungen mit Rissbildungen in der Schicht zu vermeiden. Die oder eine der hydrolysierbaren Siliciumverbindungen weisen vorzugsweise mindestens einen nicht hydrolysierbaren organischen Rest auf In einer besonders bevorzugten Ausführungsform enthält die Beschichtungszusammensetzung ein Hydrolysat oder Kondensat von einer oder mehreren hydrolysierbaren Siliciumverbindungen, einer oder mehreren hydrolysierbaren Borverbindungen und einer oder mehreren hydrolysierbaren Titanverbindungen. Durch den Einsatz der zusätzlichen Ti-Verbindungen wird die Alkalibeständigkeit der Schutzschicht noch weiter verbessert. Die hydrolysierbaren Verbindungen können auch einfache Salze sein, die zweckmäßigerweise in organischen Lösungsmitteln löslich sind.

Als hydrolysierbare Siliciumverbindungen, die hier auch als Silane bezeichnet werden, werden bevorzugt ein oder mehrerer Silane der allgemeinen Formel (I) verwendet

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für nicht hydrolysierbare organische Gruppen stehen und n 0, 1 oder 2 bedeutet

Unter den obigen Silanen der allgemeinen Formel (I) befindet sich vorzugsweise mindestens ein Silan, in dessen allgemeiner Formel (I) n den Wert 1 oder bevorzugt 2 aufweist. In einer bevorzugten Ausführungsform können mindestens zwei Silane der allgemeinen Formel (I) in Kombination eingesetzt werden, wobei ein Silan die allgemeine Formel (I), worin n = 1 oder bevorzugt 2, und ein Silan die allgemeine Formel (I), worin n = 0 ist, aufweist. Das molare Verhältnis, bezogen auf Si, von Silanen der Formel (I), worin n = 1 oder 2 ist, zu Silanen der Formel (I), worin n = 0 ist, ist bevorzugt 1:0 bis 1:1, bevorzugt 1:0 bis 2:1. Das Verhältnis 1:0 bedeutet dabei, dass nur Silane mit mindestens einem nicht hydrolysierbaren organischen Rest eingesetzt werden. Der zumindest teilweise Einsatz von Silane mit mindestens einem nicht hydrolysierbaren organischen Rest ist vorteilhaft, da damit die Flexibilität verbessert und dass Rissvermögen weiter verringert wird.

In der allgemeinen Formel (I) sind die Gruppen X, die gleich oder voneinander verschieden sein können, hydrolysierbare Gruppen oder Hydroxyl Beispiele für hydrolysierbare Gruppen X sind Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen, insbesondere C₁₋₄-Alkoxygruppen wie Methoxy, Ethoxy, n-Propoxy und i-Propoxy, wobei Methoxy- oder Ethoxygruppen besonders bevorzugt sind.

Bei den Gruppen R in der allgemeinen Formel (I), die im Falle von n = 2 gleich oder identisch sein können, handelt es sich z.B. um Wasserstoff, Alkyl-, Alkenyl- und Alkinylgruppen mit vorzugsweise bis zu 4 Kohlenstoffatomen und Aryl-, Aralkyl- und Alkarylgruppen mit vorzugsweise 6 bis 10 Kohlenstoffatomen, wobei Alkylgruppen bevorzugt sind Konkrete Beispiele für derartige Gruppen sind Methyl, Ethyl, n-Propyl, i-Propyl, n-Butyl, sek.-Butyl und tert.-Butyl, Vinyl, Allyl und Propargyl, Phenyl, Tolyl und Benzyl Die Gruppen können übliche Substituenten aufweisen, vorzugsweise tragen derartige Gruppen aber keinen Substituenten. Silane, die eine Alkylgruppe aufweisen werden auch als Alkylsilane, bzw. Monalkylsilane für n = 1 und Dialkylsilane für n = 2 bezeichnet. Bevorzugte Gruppen R sind Alkylgruppen mit 1 bis 4 Kohlenstoffatomen, insbesondere Methyl und Ethyl, sowie Phenyl.

Beispiele für Silane der Formel (I) sind Si(OCH₃)₄, Si(OC₂H₅)₄, Si(O-n- oder i-C₃H₇)₄, Si(OC₄H₉)₄, SiCl₄, HSiCl₃, Si(OOCC₃H)₄, Methyltri(m)ethoxysilan ((M)ethoxy bedeutet Methoxy oder Ethoxy), Methyltripropoxysilan, Ethyltri(m)ethoxysilan, Phenyltri-(m)ethoxysilan, Dimethyldi(m)ethoxysilan und Diphenyldi(m)ethoxysilan Von diesen Silanen sind insbesondere Tetramethoxysilan und Tetraethoxysilan (TEOS) für n = 0 und Methyltriethoxysilan, und Dimethyldi(m)ethoxysilan für n = 1 oder 2 bevorzugt. Besonders bevorzugt wird für die Grundschicht mindestens ein Dialkylsilan wie Dimethyldiethoxysilan eingesetzt, da dann die beste Flexibilität und Risseständigkeit erreicht wird.

Als hydrolysierbare Borverbindungen können Verbindungen der allgemeinen Formel BX₃ (II) eingesetzt werden, wobei X eine gleiche oder unterschiedliche hydrolysierbare Gruppe ist, die bevorzugt wie in der Formel (I) definiert ist. Bevorzugte Borverbindungen sind Borhalogenide, Borsäure und Borsäureester Beispiele sind Borsäure, BCl₃, B(OCH₃)₃ und B(OC₂H₅)₃.

Bei der hydrolysierbaren Titanverbindung, die optional und bevorzugt eingesetzt wird, handelt es sich insbesondere um eine hydrolysierbare Verbindung der Formel TiX₄ (III), wobei X eine gleiche oder unterschiedliche hydrolysierbare Gruppe ist, die bevorzugt wie in der Formel (I) definiert ist Bevorzugte hydrolysierbare Reste sind Alkoxygruppen, insbesondere C₁₋₄-Alkoxy.. Konkrete und bevorzugt eingesetzte Titanate sind TiCl₄, Ti(OCH₃)₄, Ti(OC₂H₅)₄, Ti(pentoxy)₄, Ti(hexoxy)₄, Ti(2-ethyl-hexoxy)₄, Ti(n-OC₃H₇)₄ oder Ti(i-OC₃H₇)₄, wobei Ti(OCH₃)₄, Ti(OC₂H₅)₄ und Ti(n- oder i-OC₃H₇)₄ bevorzugt sind..

Die Hydrolyse oder Kondensation kann in Anwesenheit eines Lösungsmittels, wie einem organischen Lösungsmittel oder Wasser, durchgeführt werden Als organische Lösungsmittel eignen sich insbesondere mit Wasser mischbare Lösungsmittel wie beispielsweise ein- oder mehrwertige aliphatische Alkohole, vorzugsweise ein Alkohol mit 1 bis 4 Kohlenstoffatomen, wie z.B. Methanol, Ethanol, Propanol und Isopropanol, Ether (wie beispielsweise Diether), Ester (wie beispielsweise Ethylacetat), Ketone, Amide, Sulfoxide und Sulfone. Weitere geeignete Lösungsmittel oder Colösungsmittel sind z.B. Glycole wie Ethylenglycol, Propylenglycol oder Butylenglycol. Die Hydrolyse oder Kondensation kann in einer bevorzugten Ausführungsform auch in Abwesenheit eines Lösungsmittels durchgeführt werden. Sofern Alkoxide als Ausgangsmaterial verwendet werden, bilden sich bei der Hydrolyse Alkohole, die als Lösungsmittel dienen können

Die Mengen der Silicium-, Bor- und gegebenenfalls Titanverbindungen können in weiten Bereichen variieren. Die Mengen der Silicium- und Bor-Ausgangsverbindungen werden aber bevorzugt so gewählt, dass das molare Verhältnis von Si:B 32:1 bis 1:1, bevorzugt 10:1 bis 1,2:1 und besonders bevorzugt 8:1 bis 2:1 beträgt, wobei z.B. besonders gute Ergebnisse mit einem Verhältnis von etwa 4:1 erzielt werden Sofern auch hydrolysierbare Titan-Verbindungen eingesetzt werden, wird die Menge bevorzugt so gewählt, dass das molare Verhältnis von Si:Ti 30:1 bis 1:1, bevorzugt 16:1 bis 1,3:1 beträgt, wobei z.B. besonders gute Ergebnisse mit einem Verhältnis von etwa 8:1 erzielt werden. Das molare Verhältnis B:Ti kann z B 5:1 bis 1:2, bevorzugt 4:1 bis 1:1 betragen, wobei besonders gute Ergebnisse z.B bei einem Verhältnis von etwa 2:1 erzielt werden.

Die Beschichtungszusammensetzung kann gegebenenfalls weitere Komponenten enthalten, z.B. hydrolysierbare Verbindungen oder Salze anderer Elemente für die Matrix oder andere Additive wie z.B. Verlaufmittel, Mattierungsmittel, Sinterhilfsmittel, Tenside und Viskositätsverbesserer. Bei den hydrolysierbaren Verbindungen von anderen Elementen, die gegebenenfalls in die Oxidmatrix eingebaut werden können, handelt es sich insbesondere um Verbindungen mindestens eines Elements M aus den Hauptgruppen III bis V und/oder den Nebengruppen II bis IV des Periodensystems der Elemente. Dies können hydrolysierbare Verbindungen von Al, Sn, Zr, V oder Zn sein Auch andere hydrolysierbare Verbindungen können eingesetzt werden, wie solche von Elementen der Hauptgruppen I und II des Periodensystems (z B. Na, K, Ca und Mg) und der Nebengruppen V bis VIII des Periodensystems (.z. Mn, Cr, Fe und Ni) oder hydrolysierbare Verbindungen von Lanthaniden. Im allgemeinen machen solche andere hydrolysierbare Verbindungen aber, bezogen auf den Feststoffoxidgehalt der fertigen Grund- bzw. Deckschicht, nicht mehr als 20 Gew.-%, bevorzugt nicht mehr als 5 Gew.-% und insbesondere nicht mehr als 2 Gew.-% aus.

Die Beschichtungszusammensetzung für die Deckschicht umfasst ein Hydrolysat oder Kondensat von einer oder mehreren hydrolysierbaren Siliciumverbindungen, wobei mindestens eine hydrolysierbare Siliciumverbindung einen nicht hydrolysierbaren organischen Rest aufweist In einer besonders bevorzugten Ausführungsform enthält die Beschichtungszusammensetzung ferner Teilchen, vorzugsweise nanoskalige Teilchen, insbesondere aus einem Metall- oder Halbmetalloxid, wie SiO₂

Als hydrolysierbare Siliciumverbindungen für die Deckschicht eignen sich genau dieselben Silane der allgemeinen Formel (I), die vorstehend für die Grundschicht erläutert wurden, wobei mindestens ein für die Deckschicht eingesetztes Silan ein Silan der allgemeinen Formel (I) ist, worin n den Wert 1 oder 2 aufweist. In der Regel werden mindestens ein Silan der allgemeinen Formel (I), worin n = 0 ist, und mindetens ein Silan, worin n = 1 oder 2, wobei n = 1 bevorzugt ist, in Kombination eingesetzt. In diesem Fall werden diese Silane bevorzugt in einem solchen Verhältnis eingesetzt, dass der Durchschnittswert von n (der Silane auf molarer Basis) 0,2 bis 1,5, vorzugsweise 0,5 bis 1,0, beträgt Besonders bevorzugt ist ein Durchschnittswert von n im Bereich von 0,6 bis 0,8.

Derartige Silan-Mischungen für die Deckschicht umfassen zum Beispiel mindestens ein Alkylsilan, wie ein Alkyltrialkoxysilan, z.B. Methyltri(m)ethoxysilan oder Ethyltri-(m)ethoxysilan, und ein Tetraalkoxysilan wie Tetra(m)ethoxysilan, die vorzugsweise in einem solchen Verhältnis eingesetzt werden, dass der Durchschnittswert von n in den oben angegebenen bevorzugten Bereichen liegt. Eine besonders bevorzugte Kombination für die Ausgangssilane der Formel (I) für die Deckschicht ist Methyl-tri(m)ethoxysilan und Tetra(m)ethoxysilan Es wird angenommen, dass die Anwesenheit von Gruppen R in den Ausgangssilanen dazu dient, eine zu starke Vernetzung des organischen SiO₂-Gerüstes und somit eine zu starke Versprödung zu verhindern.

In einer bevorzugten Ausführungsform umfasst die Beschichtungszusammensetzung für die Deckschicht ferner Teilchen, insbesondere nanoskalige Teilchen. Die Teilchen können jede geeignete Größe aufweisen, z.B. mit einem mittleren Teilchendurchmesser von weniger als 1 µm. Unter nanoskaligen Teilchen werden vorzugsweise Teilchen mit einem mittleren Teilchendurchmesser von nicht mehr als 200 nm, bevorzugter nicht mehr als 100 nm und insbesondere nicht mehr als 50 nm verstanden. Der mittlere Teilchendurchmesser bezieht sich auf das Volumenmittel (d₅₀), wobei ein UPA (Ultrafine Particle Analyzer, Leeds Northrup (laseroptisch, dynamische Laserlichtstreuung)) zur Messung verwendet werden kann.

Bei den Teilchen handelt es sich insbesondere um anorganische Feststoffteilchen. Bevorzugt handelt es sich um Teilchen aus Metall- oder Halbmetallverbindungen, insbesondere Metall- oder Halbmetallchalkogeniden. Hierfür können alle Metalle oder Halbmetalle (im folgenden auch gemeinsam als M abgekürzt) eingesetzt werden Bevorzugte Metalle oder Halbmetalle M für die Metall- oder Halbmetallverbindungen sind z.B. Mg, B, AI, Ga, In, Si, Ge, Sn, Pb, Y, Ti, Zr, V, Nb, Ta, Mo, W, Fe, Cu, Ag, Zn, Cd, Ce und La oder Mischungen davon. Es kann eine Art von Nanopartikel oder eine Mischung von Nanopartikeln eingesetzt werden. Die Teilchen können auf verschiedene Weise hergestellt werden, z.B. durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren. Diese Verfahren sind in der Literatur ausführlich beschrieben.

Beispiele sind (gegebenenfalls hydratisierte) Oxide wie ZnO, CdO, SiO₂, GeO₂, TiO₂, ZrO₂, CeO₂, SnO₂, Al₂O₃ (insbesondere Böhmit, AlO(OH), auch als Aluminiumhydroxid), B₂O₃, In₂O₃, La₂O₃, Fe₂O₃, Fe₃O₄, Cu₂O, Ta₂O₅, Nb₂O₅, V₂O₅, MoO₃ oder WO₃, Phosphate, Silicate, Zirconate, Aluminate, Stannate von Metallen oder Halbmetallen, und entsprechende Mischoxide, Spinelle, Ferrite oder Mischoxide mit Perowskitstruktur wie BaTiO₃ und PbTiO₃. Bevorzugte Teilchen sind SiO₂, Al₂O₃, AIOOH, Ta₂O₅, ZrO₂ und TiO₂, wobei SiO₂ am meisten bevorzugt ist

Als Teilchen können z.B. handelsübliche Kieselsäureprodukte, z.B. Kieselsole, wie die Levasile®, Kieselsole der Bayer AG, oder pyrogene Kieselsäuren, z.B. die Aerosil-Produkte von Degussa, verwendet werden. Die teilchenförmigen Materialien können in Form von Pulvern und Solen eingesetzt werden Sie können auch in situ gebildet werden .

Bei dieser bevorzugten Ausführungsform des erfindungsgemäßen Verfahrens werden die zusätzlich zu den hydrolysierbaren Silanen der allgemeinen Formel (I), insbesondere der oben erläuterten Kombination von Silanen mit n = 0 und Silanen mit n = 1 oder 2, verwendeten Teilchen, insbesondere nanoskaligen SiO₂-Teilchen, vorzugsweise in einer solchen Menge eingesetzt, dass das molare Verhältnis aller Si-Atome in den Silanen der allgemeinen Formel (I) zu allen M-Atomen in den Teilchen, die im Fall von SiO₂-Teilchen ebenfalls Si sind, im Bereich von 5:1 bis 1:2, insbesondere 3:1 bis 1:1, liegt.

Bezüglich Lösungsmittel, Hydrolyse und Kondensation, weiterer Komponenten, wie hydrolysierbarer Verbindungen, wobei für die Deckschicht zusätzlich auch die hydrolysierbare Titanverbindungen wie für die Grundschicht definiert in Betracht kommen, oder Salze anderer Elemente für die Matrix oder anderer Additive für die Deckschicht gilt das für die Grundschicht Gesagte entsprechend.

Insbesondere können zur Beschichtungszusammensetzung für die Deckschicht handelsübliche Mattierungsmittel, z.B. mikroskalige SiO₂-Pulver, organische Mattierungsmittel oder keramische Pulver zugesetzt werden, um mattierte Schichten mit Anti-Fingerprint-Eigenschaften zu erreichen. Sofern eingesetzt, können die Hydrolyse und Polykondensation der Silane in Anwesenheit von Mattierungsmitteln, z.B. mikroskaligen SiO₂- oder keramischen Pulvern erfolgen.

In einer weiteren Ausführungsform können der Beschichtungszusammensetzung für die Deckschicht als Additive auch farbgebende anorganische Pigmente beigemischt werden, um Farbeffekte zu erzielen. Bei den Farbpigmenten kann es sich um übliche im Handel erhältliche Pigmente handeln.

Es können selbstverständlich alle geeigneten Farbpigmente eingesetzt werden, insbesondere anorganische Farbpigmente. Zusammenfassende Darstellungen zu geeigneten Farbpigmenten finden sich z.B in Ullmanns Encyklopädie der technischen Chemie, 4. Auflage, Bd 18, S. 569-645. Beispiele sind schwarze Eisenoxid-Pigmente, wie FK 3161 (Fa. Ferro Gmbh, aus Co/Fe/Cr), Black 1G (The Sheperd Coloro Company) und Eisenoxidschwarz 1310 HR (Liebau Metox GmbH), schwarze Russpigmente, wie Timrex KS4 (Timcal Graphit & Carbon, Russpaste DINP 25/V und Tack AC 15/200 (Gustav Grolman GmbH & Co KG), Graphit, Metalloxid-Pigmente, wie farbige Eisenoxid-Pigmente, Chromoxid-Pigmente, Mischmetalloxid-Pigmente (z.B. Ni/Sb/Ti-Oxid, Co/Al-Oxid, Mn/Cu/Cr-Oxid, Fe/Cr-Oxid), Mischungen von Metalloxid-Pigmenten und Graphit, Cadmium-Pigmente (z.B. CdS, Cd(S, Se)), Bismuth-Pigmente, Chromat-Pigment, wie Chromgelb, Chromgrün, Molybdatrot, Ultramarin-Pigmente und Berliner Blau.

Die Beschichtungszusammensetzungen der Grundschicht und der Deckschicht werden, nachdem gegebenenfalls die Viskosität durch Zugabe oder Entfernen von Lösungsmittel eingestellt wurde, jeweils mit den üblichen nasschemischen Beschichtungsverfahren auf die zu beschichtenden Oberfläche des Leichtmetalls aufgebracht. Anwendbare Techniken sind zum Beispiel das Tauchen, Gießen, Schleudern, Sprühen, Schleuderbeschichten oder Aufstreichen.

Nach Auftrag der Beschichtungszusammensetzung für die Grundschicht wird diese gegebenenfalls getrocknet und dann thermisch behandelt, um die Grundschicht zu bilden. Im Anschluss daran wird die Beschichtungszusammensetzung der Deckschicht auf die thermisch behandelte Grundschicht aufgebracht und thermisch behandelt, um die Deckschicht zu bilden. Dies ist die bevorzugte Vorgehensweise. Alternativ kann nach Auftrag der Beschichtungszusammensetzung der Grundschicht unmittelbar die Beschichtungszusammensetzung der Deckschicht aufgebracht werden und beide Schichten gemeinsam unter Bildung der Grundschicht und Deckschicht thermisch behandelt werden, wobei in diesem Fall vor Auftrag der Beschichtungszusammensetzung der Deckschicht die aufgetragene Zusammensetzung der Grundschicht zwar nicht vollständig aber in einem gewissen Maß verfestigt werden kann, z.B. durch Trocknung oder durch thermische Vorbehandlung, z.B. bei niedrigeren Temperaturen und für kürzere Zeit, ohne dass es zu einer vollständigen Aushärtung kommt.

Die optionale Trocknung und die thermische Behandlung der beiden Schichten können im wesentlichen auf gleiche Weise erfolgen, unabhängig davon ob eine gesonderte oder gemeinsame thermische Behandlung durchgeführt wird. Die nachfolgenden Ausführungen gelten somit für beide Schichten gleichermaßen.

Die aufgetragenen Beschichtungszusammensetzungen werden thermisch behandelt, um eine Verdichtung bzw. Härtung zu erreichen. Vor der thermischen Verdichtung kann eine Trocknung der Beschichtungszusammensetzung bei Raumtemperatur bzw. leicht erhöhter Temperatur, z.B. einer Temperatur von bis zu 100°C oder bis zu 80°C, durchgeführt werden

Obwohl sich die Temperatur oder Endtemperatur bei der thermischen Behandlung auch an der Wärmebeständigkeit der metallischen Oberfläche orientieren muss, liegt diese Temperatur in der Regel bei mindestens 300°C, in der Regel mindestens 350°C und bevorzugt mindestens 400°C oder mindestens 420°C. Die Endtemperatur wird gewöhnlich durch eine allmähliche Erhöhung der Temperatur, z.B. mit bestimmten Temperatursteigerungen im Zeitintervall, erreicht Nach der thermischen Behandlung wird eine stabilisierte, d h verdichtete oder gehärtete Schicht erhalten. Wenn die metallische Oberfläche insbesondere bei diesen hohen Temperaturen oxidationsempfindlich ist, empfiehlt es sich, die thermische Verdichtung in einer sauerstofffreien Atmosphäre, z.B. unter Stickstoff oder Argon, durchzuführen. Ebenso ist eine Verdichtung im Vakuum möglich. Die thermische Behandlung kann gegebenenfalls auch durch IR- oder Laser-Strahlung erfolgen.

Die maximalen Temperaturen für die thermische Behandlung hängen natürlich auch von der thermischen Beständigkeit der zu behandelnden Gegenstände ab und können bis kurz unter dem Erweichungspunkt des Gegenstands liegen. In der Regel liegen die Temperaturen zur thermischen Behandlung unter 800°C. Bei der thermischen Behandlung werden in der Regel die organischen Bestandteile vollständig ausgebrannt, so dass rein anorganische Schichten erhalten werden. Die Beschichtungszusammensetzungen können zu rissfreien und transparenten Schichten verdichtet werden, selbst wenn sich auf der zu beschichtenden Oberfläche des Leichtmetalls poröse Schichten befinden.

Die Wärmebehandlung zum Verdichten kann z.B. im Ofen, mittels IR-Bestrahlung oder durch Beflammen erfolgen Durch die Wärmebehandlung wird die Schutzschicht getempert

Es wird eine Matrix aus Oxiden bzw. Mischoxiden von Si und B (SiO₂ / B₂O₃) oder gegebenenfalls Ti (SiO₂ / B₂O₃ / TiO₂) in der Grundschicht und von Si (SiO₂) erhalten, die hier als Oxidschicht von Si und Bor und gegebenenfalls Titan bzw als Oxidschicht von Si bezeichnet wird, wobei die Stöchiometrie vom molaren Verhältnis der eingesetzten Ausgangsverbindungen abhängt, wie vorstehend erläutert. Die Deckschicht wird zu einer glasartigen Schicht verdichtet. Die Oxidschicht von Si und Bor und gegebenenfalls Titan bzw. die Oxidschicht von Si enthält gegebenenfalls weitere Metalle oder Halbmetalle, wenn weitere hydrolysierbare Verbindungen anderer Metalle oder Halbmetalle für die Beschichtungszusammensetzung eingesetzt werden wie vorstehend erläutert Ferner können die Oxidschichten weitere Additive, wie Pigmente, umfassen. Durch den bevorzugten Einsatz von Teilchen in der Deckschicht, kann eine strukturierte Phase bzw. Schicht gebildet werden, in der die Teilchenstruktur der Teilchen in der umgebenden Matrixphase aus dem Hydrolysat und Kondensat erkennbar bleibt, was gegebenenfalls auch beim Einsatz von SiO₂-Teilchen der Fall sein kann. Die erhaltene Schutzschicht aus zwei Schichten bietet einen außerordentlich guten Schutz gegen einen Angriff durch alkalische Medien

Die erfindungsgemäß verwendete Schutzschicht eignet sich insbesondere zur Beschichtung der obengenannten Gegenstände. Die Schutzschicht ist in der Regel glasklar und transparent und kann so aufgetragen werden, dass die metallische Oberfläche in ihrem Aussehen nicht verändert wird, selbst wenn ein Dekor, z.B. durch Farbanodisierung, vorhanden ist Durch Einsatz von Mattierungsmitteln, insbesondere in der Deckschicht, kann das Aussehen etwa bezüglich des Glanzes optimiert werden. Die Schutzschicht eignet sich auch für eine Anti-Fingerprint-Ausrüstung. Der dekorative Effekt der metallischen Oberflächen, auch von strukturierten Oberflächen, bleibt wegen der optisch neutralen Wirkung der Beschichtung erhalten.

Das erfindungsgemäße System eignet sich insbesondere als alkalibeständige Schutzschicht von Oberflächen von Leichtmetall und insbesondere als spülmaschinenfeste Schutzschicht. Die folgenden Beispiele erläutern die Erfindung.

### Beispiele

### A. Grundschicht

### 1. System DMDEOS / B(OEt)₃ (für Grundschicht 1)

3,71 g (0,025 mol) Dimethyldiethoxysilan (DMDEOS) und 0,92 g (0,006 mol) Triethylborat wurden gemischt und anschließend mit einer Mischung von 0,50 g Wasser und 0,04 g konzentrierter Salzsäure versetzt und 30 min bei Raumtemperatur gerührt. Anschließend wurde zu der Mischung 0,45 g Wasser in 1,1 g Butylglycol für die vollstöchiometrische Hydrolyse zugegeben. Nach 1 h Rühren wurde mit 0,06 g BYK 306 versetzt und die erhaltene Beschichtungszusammensetzung für die Beschichtung gemäß B verwendet.

### 2. System DMDEOS / TEOS / B(OEt)₃ / Ti(O i-Pr)₄ (für Grundschicht 2)

3,71 g (0,025 mol) Dimethyldiethoxysilan (DMDEOS), 0,87 g (0,0042 mol) Tetraethoxysilan (TEOS) und 0,92 g (0,006 mol) Triethylborat wurden gemischt und anschließend mit 0,50 g Wasser und 0,04 g konzentrierter Salzsäure versetzt. Zu dem Reaktionsgemisch wurden sofort 1,04 g (0,0037 mol) Titanium(IV)isopropoxid zugegeben und das Ganze 30 min bei Raumtemperatur gerührt. Anschließend wurden zu der Mischung 0,85 g Wasser in 2 g Butylglycol für die vollstöchiometrische Hydrolyse zugegeben. Nach 1 h Rühren wurde mit 0,06 g BYK 306 versetzt und die erhaltene Beschichtungszusammensetzung für die Beschichtung gemäß B verwendet.

### 3. System DMDEOS /TEOS / B(OEt)₃ /Ti(O i-Pr)₄ (für Grundschicht 3)

3,71 g (0,025 mol) Dimethyldiethoxysilan (DMDEOS), 0,87 g (0,0042 mol) Tetraethoxysilan (TEOS) und 0,92 g (0,006 mol) Triethylborat werden gemischt und anschließend mit 0,50 g Wasser und 0,04 g konzentrierter Salzsäure versetzt und das Ganze 30 min bei Raumtemperatur gerührt. Anschließend wird zu der Mischung 0,72 g Wasser in 1,65 g Butylglycol für die vollstöchiometrische Hydrolyse zugegeben Nach 1 h Rühren wird mit 0,06 g BYK 306 versetzt und die erhaltene Beschichtungszusammensetzung für die Beschichtung gemäß B verwendet

### B. Beschichtung mit Grundschichten 1 bis 3

Es wurden Tefal-Töpfe jeweils mit den Systemen 1 bis 3 beschichtet Die Lösungen für die Grundschicht wurden vor dem Beschichten filtriert (1,2 µm Porengröße). Die Töpfe waren zuvor mit Alkohol gereinigt. Die Schichten wurden jeweils mit einer Heizrate von 1° K/min bei 450°C ausgehärtet. Es wurden die Grundschichten 1 bis 3 erhalten.

### C. Deckschicht

### System MTEOS / TEOS / Levasil 300-30 (für Deckschicht)

8,9 g (0,05 mol) Methyltriethoxysilan (MTEOS), 2,6 g (0,0125 mol) Tetraethoxysilan (TEOS) und 1,93 g Levasil 300-30 (Fa. Bayer) wurden gemischt und anschließend mit 0,08 g konzentrierter Salzsäure versetzt Die Mischung wurde 30 min bei Raumtemperatur gerührt Anschließend wurde zu der Mischung 1,41 g Wasser für die vollstöchiometrische Hydrolyse zugegeben. Nach 15 min Rühren wurde zu der Mischung 0,19 g Mattierungsmittel OK 500 (SiO₂-Teilchen, Fa. Degussa) gegeben und 1 h gerührt

Die mit den Grundschichten 1 bis 3 vorbeschichteten Teile gemäß B wurden jeweils mit der vorstehenden Beschichtungszusammensetzung für die Deckschicht überschichtet. Die Schichten wurden mit der Heizrate 1° K/min bei 450°C ausgehärtet. Es wurden die Schutzschichten 1 bis 3 erhalten.

### D. Vergleichsbeispiel

Ein Tefal-Topf wurde auf die gleiche Weise wie unter C beschrieben mit einer Deckschicht versehen, ohne dass zuvor eine Grundschicht aufgebracht worden war.

### E. Prüfung

Die Schutzschichten 1 bis 3 waren alle rissfrei. Im Vergleich dazu zeigte die gemäß Vergleichsbeispiel aufgebrachte Schicht (Deckschicht ohne Grundschicht) Risse, so dass damit keine ausreichende Basenbeständigkeit erhalten werden konnte.

Die Basenbeständigkeit der Schutzschichten 1 bis 3 wurde getestet, indem sie viermal 5 min einer 4% NaOH-Lösung bei 60°C ausgesetzt wurden. Alle Schutzschichten zeigten eine gute Beständigkeit, wobei die Schutzschicht 2 (Ti-haltige Grundschicht 2 und Deckschicht) noch stabiler war als die Schutzschichten 1 und 3 (Grundschicht 1 und Deckschicht bzw Grundschicht 3 und Deckschicht).

## Patentansprüche

1. Gegenstand umfassend eine Oberfläche von Leichtmetall, die mit einer alkalibeständigen Schutzschicht versehen ist, **dadurch gekennzeichnet, dass** die Schutzschicht a) eine Oxidschicht von Silicium und Bor als Grundschicht und b) eine Oxidschicht von Silicium, die gegebenenfalls Farbpigmente umfasst, als glasartige Deckschicht umfasst,
erhältlich durch ein Verfahren, bei dem
1) nasschemisch eine Beschichtungszusammensetzung, die ein Hydrolysat oder Kondensat von einer oder mehreren hydrolysierbaren Siliciumverbindungen und einer oder mehreren hydrolysierbaren Borverbindungen umfasst, auf die Oberfläche des Leichtmetalls aufgebracht und thermisch behandelt wird, um die Grundschicht zu bilden, und
2) nasschemisch eine Beschichtungszusammensetzung, die ein Hydrolysat oder Kondensat von einer oder mehreren hydrolysierbaren Siliciumverbindungen umfasst, wobei mindestens eine hydrolysierbare Siliciumverbindung mindestens eine nicht hydrolysierbare organische Gruppe aufweist, auf die Grundschicht aufgebracht und thermisch behandelt wird, um die Deckschicht zu bilden,
wobei die thermische Behandlung zur Bildung der Grundschicht vor dem Auftrag der Beschichtungszusammensetzung für die Deckschicht oder danach zusammen mit der thermischen Behandlung zur Bildung der Deckschicht erfolgen kann.

2. Gegenstand nach Anspruch 1, **dadurch gekennzeichnet, dass** das Leichtmetall Aluminium, Titan oder Magnesium oder eine Legierung davon ist, wobei Aluminium und dessen Legierungen bevorzugt sind.

3. Gegenstand nach Anspruch 1 oder 2, **dadurch gekennzeichnet, dass** das Leichtmetall oberflächenbehandelt sein kann.

4. Gegenstand nach einem der Ansprüche 1 bis 3, **dadurch gekennzeichnet, dass** das Leichtmetall mit einer Oxidschicht des Leichtmetalls überzogen ist, wobei die Oxidschicht des Leichtmetalls vorzugsweise von selbst oder durch anodische Oxidation gebildet ist.

5. Gegenstand nach einem der Ansprüche 1 bis 4, **dadurch gekennzeichnet, dass** das Leichtmetall Aluminium oder eine Alumiumlegierung ist, das mit einer anodisch gebildeten Oxidschicht überzogen ist, in die gegebenenfalls Pigmente eingelagert sind.

6. Gegenstand nach einem der Ansprüche 1 bis 5, **dadurch gekennzeichnet, dass** die Grundschicht eine Oxidschicht von Silicium, Bor und Titan umfasst.

7. Gegenstand nach einem der Ansprüche 1 bis 6, **dadurch gekennzeichnet, dass** das Atomverhältnis von Si:B in der Grundschicht im Bereich von 32:1 bis 1:1 liegt.

8. Gegenstand nach Anspruch 6 oder Anspruch 7, **dadurch gekennzeichnet, dass** das Atomverhältnis von Si:Ti in der Grundschicht im Bereich von 30:1 bis 1:1 liegt.

9. Gegenstand nach einem der Ansprüche 1 bis 8, **dadurch gekennzeichnet, dass** die Grundschicht im wesentlichen eine Oxidschicht von Silicium und Bor oder von Silicium, Bor und Titan ist.

10. Gegenstand nach einem der Ansprüche 1 bis 9, **dadurch gekennzeichnet, dass** der Gegenstand ein Haushaltsgegenstand oder ein Haushaltsgerät oder ein Teil davon, insbesondere Besteck oder Kochgeschirr, ist oder ein Behälter für chemische Anlagen oder ein Teil davon ist.

11. Verfahren zur Herstellung einer alkalibeständigen Schutzschicht auf einer Oberfläche von Leichtmetall von einem Gegenstand, wobei die Schutzschicht a) eine Oxidschicht von Silicium und Bor als Grundschicht und b) eine Oxidschicht von Silicium, die gegebenenfalls Pigmente umfasst, als glasartige Deckschicht umfasst, bei dem
1) nasschemisch eine Beschichtungszusammensetzung, die ein Hydrolysat oder Kondensat von einer oder mehreren hydrolysierbaren Siliciumverbindungen und einer oder mehreren hydrolysierbaren Borverbindungen umfasst, auf die Oberfläche des Leichtmetalls aufgebracht und thermisch behandelt wird, um die Grundschicht zu bilden, und
2) nasschemisch eine Beschichtungszusammensetzung, die ein Hydrolysat oder Kondensat von einer oder mehreren hydrolysierbaren Siliciumverbindungen umfasst, wobei mindestens eine hydrolysierbare Siliciumverbindung mindestens eine nicht hydrolysierbare organische Gruppe aufweist, auf die Grundschicht aufgebracht und thermisch behandelt wird, um die Deckschicht zu bilden,
wobei die thermische Behandlung zur Bildung der Grundschicht vor dem Auftrag der Beschichtungszusammensetzung für die Deckschicht oder danach zusammen mit der thermischen Behandlung zur Bildung der Deckschicht erfolgen kann.

12. Verfahren nach Anspruch 11, **dadurch gekennzeichnet, dass** die thermische Behandlung zur Bildung der Grundschicht und/oder Deckschicht bei einer Temperatur von mindestens 300°C durchgeführt wird.

13. Verfahren nach Anspruch 11 oder Anspruch 12, **dadurch gekennzeichnet, dass** die Beschichtungszusammensetzung für die Grundschicht ein Hydrolysat oder Kondensat von hydrolysierbaren Siliciumverbindungen, hydrolysierbaren Borverbindungen und hydrolysierbaren Titanverbindungen umfasst.

14. Verfahren nach einem der Ansprüche 11 bis 13, **dadurch gekennzeichnet, dass** mindestens eine hydrolysierbare Siliciumverbindung für die Beschichtungszusammensetzung der Grundschicht mindestens eine nicht hydrolysierbare organische Gruppe aufweist, wobei für das Hydrolysat oder Kondensat in der Beschichtungszusammensetzung der Grundschicht das molare Verhältnis von hydrolysierbaren Siliciumverbindungen mit nicht hydrolysierbaren organischen Gruppen zu hydrolysierbaren Siliciumverbindungen ohne nicht hydrolysierbare Gruppen bevorzugt im Bereich von 1:0 bis 1:1 liegt.

15. Verfahren nach einem der Ansprüche 11 bis 14, **dadurch gekennzeichnet, dass** mindestens eine hydrolysierbare Siliciumverbindung für die Beschichtungszusammensetzung der Grundschicht und/oder der Deckschicht ein Silan ausgewählt aus einem Monoalkylsilan und einem Dialkylsilan ist, wobei die hydrolysierbare Siliciumverbindung für die Grundschicht bevorzugt ein Dialkylsilan ist und die hydrolysierbare Siliciumverbindung für die Deckschicht bevorzugt ein Monoalkylsilan ist.

16. Verfahren nach einem der Ansprüche 11 bis 15, **dadurch gekennzeichnet, dass** in der Beschichtungszusammensetzung für die Deckschicht Teilchen, bevorzugt nanoskalige SiO₂-Teilchen, enthalten sind.

17. Verwendung einer Doppelschicht aus a) einer Oxidschicht von Silicium und Bor und gegebenenfalls Titan als Grundschicht und b) einer Oxidschicht von Silicium, die gegebenenfalls Pigmente enthält, als glasartiger Deckschicht zum Alkalibeständigmachen von Leichtmetalloberflächen, insbesondere als spülmaschinenfeste Schutzschicht, wobei die Doppelschicht nach dem Verfahren gemäß Anspruch 11 erhältlich ist.

## Claims

1. An article comprising a surface of light metal which is provided with an alkali-resistant protective coat, **characterized in that** the protective coat comprises
a) an oxide layer of silicon and boron as basecoat and b) an oxide layer of silicon optionally comprising color pigments, as vitreous topcoat, obtainable by a method, in which
1) a coating composition which comprises a hydrolysate or condensate of one or more hydrolyzable silicon compounds and one or more hydrolyzable boron compounds is wet-chemically applied to the surface of the light metal and subjected to thermal treatment in order to form the basecoat, and
2) a coating composition which comprises a hydrolysate or condensate of one or more hydrolyzable silicon compounds, at least one hydrolyzable silicon compound containing at least one nonhydrolyzable organic group, is wet-chemically applied to the basecoat and subjected to thermal treatment in order to form the topcoat,
it being possible for the thermal treatment to form the basecoat to take place before the application of the coating composition for the topcoat, or thereafter together with the thermal treatment to form the topcoat.

2. The article of claim 1, **characterized in that** the light metal is aluminum, titanium or magnesium or an alloy thereof, preference being given to aluminum and its alloys.

3. The article of claim 1 or 2, **characterized in that** the light metal may be surface-treated.

4. The article of any of claims 1 to 3, **characterized in that** the light metal is coated with an oxide layer of the light metal, wherein the oxide layer of the light metal is preferably formed by itself or by anodic oxidation.

5. The article of any of claims 1 to 4, **characterized in that** the light metal is aluminum or an aluminum alloy which is coated with an anodically formed oxide layer into which, optionally, pigments are incorporated.

6. The article of any of claims 1 to 5, **characterized in that** the basecoat comprises an oxide layer of silicon, boron, and titanium.

7. The article of any of claims 1 to 6, **characterized in that** the atomic ratio of Si:B in the basecoat is in the range from 32:1 to 1:1.

8. The article of claim 6 or claim 7, **characterized in that** the atomic ratio of Si:Ti in the basecoat is in the range from 30:1 to 1:1.

9. The article of any of claims 1 to 8, **characterized in that** the basecoat is essentially an oxide layer of silicon and boron or of silicon, boron, and titanium.

10. The article of any of claims 1 to 9, **characterized in that** the article is a household article or a household utensil or a part thereof, in particular a cutlery or cookware, or a container for chemical plants or a part thereof.

11. A method of producing an alkali-resistant protective coat on a surface of light metal of an article, the protective coat comprising a) an oxide layer of silicon and boron as basecoat and b) an oxide layer of silicon optionally comprising pigments, as vitreous topcoat, in which
1) a coating composition which comprises a hydrolysate or condensate of one or more hydrolyzable silicon compounds and one or more hydrolyzable boron compounds is wet-chemically applied to the surface of the light metal and subjected to thermal treatment in order to form the basecoat, and
2) a coating composition which comprises a hydrolysate or condensate of one or more hydrolyzable silicon compounds, at least one hydrolyzable silicon compound containing at least one nonhydrolyzable organic group, is wet-chemically applied to the basecoat and subjected to thermal treatment in order to form the topcoat,
it being possible for the thermal treatment to form the basecoat to take place before the application of the coating composition for the topcoat, or thereafter together with the thermal treatment to form the topcoat.

12. The method of claim 11, **characterized in that** the thermal treatment to form the basecoat and/or topcoat is carried out at a temperature of at least 300°C.

13. The method of claim 11 or claim 12, **characterized in that** the coating composition for the basecoat comprises a hydrolysate or condensate of hydrolyzable silicon compounds, hydrolyzable boron compounds, and hydrolyzable titanium compounds.

14. The method of any of claims 11 to 13, **characterized in that** at least one hydrolyzable silicon compound for the coating composition of the basecoat contains at least one nonhydrolyzable organic group, wherein for the hydrolysate or condensate in the coating composition of the basecoat the molar ratio of hydrolyzable silicon compounds having nonhydrolyzable organic groups to hydrolyzable silicon compounds without nonhydrolyzable groups is in the range from 1:0 to 1:1.

15. The method of any of claims 11 to 14, **characterized in that** at least one hydrolyzable silicon compound for the coating composition of the basecoat and/or the topcoat is a silane selected from a monoalkylsilane and a dialkylsilane, wherein the hydrolyzable silicon compound for the basecoat is preferably a dialkylsilane, and the hydrolyzable silicon compound for the topcoat is preferably a monoalkylsilane.

16. The method of any of claims 11 to 15, **characterized in that** the coating composition for the topcoat contains particles, preferably nanoscale SiO₂ particles.

17. The use of a double layer composed of a) an oxide layer of silicon and boron and optionally titanium, as basecoat and b) an oxide layer of silicon that optionally comprises pigments as vitreous topcoat for making light metal surfaces alkali-resistant, in particular as a dishwasher-resistant protective coat, wherein the double layer is obtainable by the method according to claim 11.

## Revendications

1. Objet comprenant une surface en métal léger pourvue d'une couche protectrice résistante aux alcalis, **caractérisé en ce que** la couche protectrice comprend a) une couche d'oxyde de silicium et de bore en tant que couche de base et b) une couche d'oxyde de silicium présentant le cas échéant des pigments de couleur en tant que couche de recouvrement vitreuse, pouvant être obtenu par un procédé selon lequel :
1) une composition de revêtement comprenant un hydrolysat ou un condensat d'un ou plusieurs composés de silicium hydrolysables et un ou plusieurs composés de bore hydrolysables est déposée par un procédé chimique par voie humide sur la surface du métal léger et est traitée thermiquement pour former la couche de base, et
2) une composition de revêtement comprenant un hydrolysat ou un condensat d'un ou plusieurs composés de silicium hydrolysables, où au moins un composé de silicium hydrolysable présente au moins un groupe organique non hydrolysable, est déposée par un procédé chimique par voie humide sur la couche de base et est traitée thermiquement pour former la couche de recouvrement,
dans lequel le traitement thermique destiné à former la couche de base peut s'effectuer avant l'application de la composition de revêtement pour la couche de recouvrement ou par la suite conjointement avec le traitement thermique destiné à former la couche de recouvrement.

2. Objet selon la revendication 1, **caractérisé en ce que** le métal léger est l'aluminium, le titane ou le magnésium ou un alliage de celui-ci, l'aluminium et ses alliages étant préférés.

3. Objet selon la revendication 1 ou 2, **caractérisé en ce que** le métal léger peut être traité en surface.

4. Objet selon l'une des revendications 1 à 3, **caractérisé en ce que** le métal léger est revêtu d'une couche d'oxyde de métal léger, la couche d'oxyde de métal léger étant de préférence formée d'elle-même ou par oxydation anodique.

5. Objet selon l'une des revendications 1 à 4, **caractérisé en ce que** le métal léger est l'aluminium ou un alliage d'aluminium, qui est revêtu d'une couche d'oxyde formée par voie anodique, dans laquelle des pigments sont le cas échéant incrustés.

6. Objet selon l'une des revendications 1 à 5, **caractérisé en ce que** la couche de base comprend une couche d'oxyde de silicium, de bore et de titane.

7. Objet selon l'une des revendications 1 à 6, **caractérisé en ce que** le rapport atomique du Si:B dans la couche de base est compris dans la plage de 32:1 à 1:1.

8. Objet selon la revendication 6 ou la revendication 7, **caractérisé en ce que** le rapport atomique du Si : Ti dans la couche de base est compris dans la plage de 30:1 à 1:1.

9. Objet selon l'une des revendications 1 à 8, **caractérisé en ce que** la couche de base est essentiellement une couche d'oxyde de silicium et de bore ou de silicium, de bore et de titane.

10. Objet selon l'une des revendications 1 à 9, l'objet étant **caractérisé en ce qu'**il est un objet ménager ou un appareil ménager ou une partie de ceux-ci, en particulier un couvert ou un ustensile de cuisine, ou un récipient pour installations chimiques ou une partie de celui-ci.

11. Procédé de fabrication d'une couche protectrice résistante aux alcalis sur une surface en métal léger d'un objet, dans lequel la couche protectrice comprend a) une couche d'oxyde de silicium et de bore en tant que couche de base et b) une couche d'oxyde de silicium présentant le cas échéant des pigments en tant que couche de recouvrement vitreuse, selon lequel :
1) une composition de revêtement comprenant un hydrolysat ou un condensat d'un ou plusieurs composés de silicium hydrolysables et un ou plusieurs composés de bore hydrolysables est déposée par un procédé chimique par voie humide sur la surface du métal léger et est traitée thermiquement pour former la couche de base, et
2) une composition de revêtement comprenant un hydrolysat ou un condensat d'un ou plusieurs composés de silicium hydrolysables, où au moins un composé de silicium hydrolysable présente au moins un groupe organique non hydrolysable, est déposée par un procédé chimique par voie humide sur la couche de base et est traitée thermiquement pour former la couche de recouvrement,
dans lequel le traitement thermique destiné à former la couche de base peut s'effectuer avant l'application de la composition de revêtement pour la couche de recouvrement ou par la suite conjointement avec le traitement thermique destiné à former la couche de recouvrement.

12. Procédé selon la revendication 11, **caractérisé en ce que** le traitement thermique destiné à former la couche de base et/ou la couche de recouvrement est réalisé à une température d'au moins 300°C.

13. Procédé selon la revendication 11 ou la revendication 12, **caractérisé en ce que** la composition de revêtement pour la couche de base comprend un hydrolysat ou un condensat de composés de silicium hydrolysables, de composés de bore hydrolysables, et de composés de titane hydrolysables.

14. Procédé selon l'une des revendications 11 à 13, **caractérisé en ce qu'**au moins un composé de silicium hydrolysable pour la composition de revêtement de la couche de base présente au moins un groupe organique non hydrolysable, le rapport molaire des composés de silicium hydrolysables avec les groupes organiques non hydrolysables sur les composés de silicium hydrolysables sans les groupes non hydrolysables étant compris de préférence dans la plage de 1:0 à 1:1 pour l'hydrolysat ou le condensat dans la composition de revêtement de la couche de base.

15. Procédé selon l'une des revendications 11 à 14, **caractérisé en ce qu'**au moins un composé de silicium hydrolysable pour la composition de revêtement de la couche de base et/ou de la couche de recouvrement est un silane choisi parmi un monoalkylsilane et un dialkylsilane, le composé de silicium hydrolysable pour la couche de base étant de préférence un dialkylsilane et le composé de silicium hydrolysable pour la couche de recouvrement étant de préférence un monoalkylsilane.

16. Procédé selon l'une des revendications 11 à 15, **caractérisé en ce que** des particules, de préférence des particules de SiO₂ nanométriques, sont présentes dans la composition de revêtement pour la couche de recouvrement.

17. Utilisation d'une double couche constituée a) d'une couche d'oxyde de silicium et de bore et le cas échéant de titane en tant que couche de base et b) d'une couche d'oxyde de silicium, contenant le cas échéant des pigments, en tant que de couche de recouvrement vitreuse pour rendre résistantes aux alcalis les surfaces de métal léger, en particulier en tant que couche protectrice résistante aux lave-vaisselles, la double couche pouvant être obtenue d'après le procédé selon la revendication 11.
